# EUROPEAN PATENT SPECIFICATION

(11) **EP 2 850 949 B1**
(45) Date of publication and mention of the grant of the patent: **06.02.2019**
(21) Application number: 13789984.5
(22) Date of filing: 14.05.2013
(51) Int. Cl.: A23D 9/007, A23L 33/115, C11B 5/00, A23D 7/005, A23D 9/013

(54) **EDIBLE FAT OR OIL AND PROCESS FOR PRODUCING SAME**
SPEISEFETT ODER -ÖL UND VERFAHREN ZUR HERSTELLUNG DAVON
HUILE OU GRAISSE COMESTIBLE ET SON PROCÉDÉ DE FABRICATION

(30) Priority: 16.05.2012 JP 2012112460
(43) Date of publication of application: 25.03.2015
(73) Proprietor: Fuji Oil Holdings Inc., Osaka 598-8540 (JP)
(72) Inventor: KANO, Hiroshi, Izumisano-shi Osaka 598-8540 (JP); YOKOMIZO, Futoshi, Izumisano-shi Osaka 598-8540 (JP); MORITA, Akira, Izumisano-shi Osaka 598-8540 (JP)
(74) Representative: Boult Wade Tennant LLP
(86) International application number: PCT/JP2013/063428
(87) International publication number: WO 2013/172348

(56) References cited:
- WO-A1-00/77133
- WO-A1-01/96506
- WO-A1-2010/050449
- WO-A1-2011/121865
- WO-A1-2011/122339
- JP-A- H06 279 758
- JP-A- 2001 131 572
- JP-A- 2005 204 511
- JP-A- 2008 163 202
- JP-A- 2009 291 107
- JP-A- 2010 041 965
- US-A1- 2011 212 183

## Description

### Technical Field

The present invention relates to edible fat, a food containing the edible fat and a production process thereof. More specifically, the present invention relates to edible fat having improved oxidation stability which is required for a food containing fat, a food containing the edible fat and a production process thereof.

### Background Art

An oxidation stability of food is one of the major functions because a food of which best-before date is directly or indirectly affected by it exists. Therefore, various ways have been tested for improving the oxidation stability. In addition, fat is one of the major compositions for a food. However, fat is readily oxidized. Therefore, improving an oxidation stability of fat is very important for a food containing fat.

Addition of antioxidant is generally carried out for improving an oxidation stability of fat or a food containing fat. An oil-soluble antioxidant is used because it is easy to disperse into fat. However, antioxidant capacity of the oil-soluble antioxidant is relatively lower than that of water-soluble antioxidative substance. Therefore, there are many cases of using the water-soluble antioxidant by dispersing into fat. Some methods for improving an oxidation stability of fat or a food containing a large amount of fat by dispersing a water-soluble antioxidative substance into fat are disclosed.

Methods of adding an aqueous phase containing a water-soluble antioxidative substance as a water-in-oil-soluble substance emulsion by using emulsifier are exemplified.

For example, Patent Document 1 discloses a water-in-oil lipophilic antioxidant obtained by emulsifying 100 parts by weight of aqueous solution containing one or two or more of water-soluble antioxidative substances, if necessary with synergist, and 1 to 500 parts by weight of one or two or more of lipophilic emulsifiers.

Patent Document 2 discloses a lipophilic formulation of oil-solubilized water-soluble compound. The formulation is obtained by dissolving 1 to 40 parts by weight of water-soluble compound as a water-soluble antioxidative substance other than catechin and 1 to 35 parts by weight of emulsifier having 6 to 14 of HLB into 1 to 40 parts by weight of water or alcohol, then adding 5 to 70 parts by weight of polyglycerol condensed ricinoleic acid ester to obtain a water-in-polyglycerol condensed ricinoleic acid ester emulsion liquid, and then adding and sufficiently mixing 0.5 to 30 parts by weight of enzyme-decomposed lecithin to the emulsion liquid.

Patent Document 3 discloses an antioxidant composition having good solubility into fat obtained by dissolving poorly oil-soluble antioxidative substance such as ascorbic acid, erythorbic acid, kojic acid, gallic acid and malic acid as a water-soluble antioxidative substance into lower alkyl alcohol such as ethanol, then into organic acid monoglyceride such as citric acid monoglyceride, and then dissolving the obtained mixture solution into polyglycerol condensed ricinoleic acid ester.

Patent Document 4 discloses a production process for obtaining oily liquid by pulverizing tea leaves until the average diameter becomes about 15 micrometer under dried condition, then adding the pulverized tea leaves to edible fat, then subjecting the mixture to ultrafine grinding with Wet ultrafine friction grinder until the diameter of tea leaves becomes 1 to 10 micrometer to promote a transition of tea component to edible fat, and then removing fine particles of tea leaves.

Patent Document 5 discloses a process for dispersing a water-soluble polyphenol into an oily solution with stability for a long term as a formulation which enables to provide effective antiseptic property against both gram-positive bacterium and gram-negative bacterium, and production process thereof. More specifically, the process includes mixing a polyphenol extract into an oily solution containing medium-chain fatty acid triglyceride, and then making the polyphenol extract to nanoparticles with wet grinding, and thereby the polyphenol extract is stably dissolved in the oily solution.

Patent Document 6 discloses a process for producing fat including adding a water solution of poorly oil-soluble organic acid to fat and then subjecting to dehydration at 50 to 180°C under a reduced pressure of 0.5 to 100 torr for an object of suppressing heated odor and degraded odor of fat.

Patent Document 7 discloses a process for stabilizing heated cooking oil including a step of introducing periodically an aqueous composition containing at least one antioxidant to heated cooking oil.

### Prior Art Documents

### Patent Documents

Patent Document 1: JP S63-135483 A
Patent Document 2: JP H06-254378 A
Patent Document 3: JP 2001-131572 A
Patent Document 4: JP 2003-92988 A
Patent Document 5: JP 2007-240123 A
Patent Document 6: WO 01/096506 A
Patent Document 7: JP 2005-520565 A

US 2011/212183 discloses compositions suitable for improving oxidative stability of marine oils, marine oils having improved oxidative stability as well as methods for manufacturing such compositions. JP H06 279758 is directed to an antioxidant composition which is easily soluble in oil and fat without precipitating a catechin which is insoluble in oil and fat. JP 2010 041965 discloses a method for producing catechin dispersed in oils and fats which comprise catechin, a green tea extract containing ≥0.5 mass % of the green tea-derived hexane-soluble component and an oil and fat base. JP 2009 291107 relates to olive oil containing a high concentration of polyphenol obtained by dissolving olive fruit derived water-soluble components in olive oil. WO 00/77133 discloses a fat composition with excellent antioxidant stability containing a fat comprising at least 15% by weight of diglycerides, on L-ascorbic acid fatty acid ester and a member selected from catechin, rosemary extract, sage extract and turmeric extract.

### Summary of the Invention

### Problems to be Solved by the Invention

Fat having good taste and not spoiling the original taste of food with improved oxidation stability is desired in fat or a food containing fat. Therefore, obtaining good taste is also important as well as improving the oxidation stability. As described above, addition of relatively high amount of emulsifier is necessary in Patent Documents 1 to 3 in order to solubilize a water-soluble antioxidative substance. The present inventors have made extensive research based on the assumption that emulsifier causes undesired taste.

Patent Document 4 has a problem that the process is complicate because a step for removing tea leaves with filtration and centrifugation after pulverizing is necessary. Patent Document 5 has problems that fat for dispersing water-soluble polyphenol is limited to medium-chain fatty acid triglyceride and highly specialized wet grinding apparatus is necessary for making nanoparticles. In addition, Patent Document 6 intends to suppress heated odor and degraded odor of fat and does not describe antioxidative substance and water-soluble polyphenol. In Patent Document 7, an aqueous composition containing an antioxidant which is not essentially soluble in fat is introduced directly into the heated cooking oil. Therefore, homogeneous dispersion of the antioxidant cannot be expected.

As described above, it has been a difficult challenge in the prior art to obtain edible fat and a food containing the edible fat having excellent oxidation stability and good taste by simple manner. Therefore, edible fat having excellent oxidation stability and good taste, which is satisfactory from the point of effect and the product design, has not been obtained. The object of the present invention is to provide an edible fat having excellent oxidation stability and good taste by dispersing water-soluble antioxidants into edible fat with a simple method.

### Means for Solving the Problems

The present inventors have intensively studied in order to solve the problems. As a result, the present inventors have found out that edible fat having excellent oxidation stability and good taste can be obtained by adding a water-soluble antioxidative substance to fat, where the water-soluble antioxidative substance is originally poorly oil-soluble and added in the form of solution by using an aqueous medium. The present invention has been completed on the basis of these findings.

That is, the present invention is:
(1) Edible fat comprising a tea polyphenol at a content of 150 ppm by weight to 1000 ppm by weight relative to total amount of the edible fat, wherein a content of emulsifier in the edible fat is between twice as much as a content of the tea polyphenol and equal to the content of the tea polyphenol,
   wherein the emulsifier is selected from the group consisting of polyglycerol fatty acid ester, sucrose fatty acid ester and sorbitan fatty acid ester.
(2) The edible fat according to (1), wherein a main raw material of the edible fat is palm oil.
(3) The edible fat according to (1) or (2), wherein a main raw material of the edible fat is palm oil, a content of the tea polyphenol in the edible fat is 150 ppm by weight to 400 ppm by weight, a content of the emulsifier in the edible fat is 500 ppm by weight or less, a content of the emulsifier in the fat is 1.5 times or less as much as a content of the tea polyphenol and wherein value of A/N is 1.9 or more, wherein
   A represents CDM stability time of the edible fat comprising 150 ppm by weight to 400 ppm by weight of tea polyphenol, and
   N represents CDM stability time of base fat of A, wherein the base fat does not comprise tea polyphenol;
(4) A process for improving an oxidation stability of a food, comprising using the edible fat recited in any of (1) to (3);
(5) A process for producing the edible fat recited in any of (1) to (3), comprising adding tea polyphenol and an emulsifier selected from the group consisting of polyglycerol fatty acid ester, sucrose fatty acid ester and sorbitan fatty acid ester, to aqueous medium to form solution dissolving 1 to 50% by weight of tea polyphenol, and adding the solution to fat and then removing water at 50 to 180°C under reducing pressure at 66.66 to 13332.24 Pa (0.5 to 100 torr) for 15 minutes to 1 hour while stirring wherein the edible fat contains 0.1% by weight or less of water.

### Effect of the Invention

The present invention can provide edible fat having improved oxidation stability and good taste by a simple method without using a large amount of emulsifier. Also, the present invention can provide a food having excellent oxidation stability and good taste by using the edible fat of the present invention.

### Mode for Carrying Out the Invention

Available fats include plant oil such as soybean oil, rapeseed oil, corn oil, cottonseed oil, peanut oil, sunflower oil, rice oil, safflower oil, safflower oil, olive oil, sesame oil, palm oil, coconut oil and palm kernel oil, animal oil such as beef tallow and lard, processed fat thereof such as fractionated oil, hydrogenated oil and interesterified oil, and mixed fat thereof. Effect of the present invention can be obtained regardless of the kind of fat.

A water-soluble antioxidative substance refers to a compound which can be used as a water-soluble antioxidant. Water-soluble polyphenols are used. Examples of the water-soluble polyphenols include tea extract, rosemary extract, bayberry extract and the like. The water-soluble antioxidative substance can be used alone or in combination. The water-soluble antioxidative substance used in the present invention is a tea polyphenol. The water-soluble polyphenols include tea polyphenol contained in tea extract. In addition, the water-soluble antioxidative substance can be used without damaging the function thereof even in combination with an oil-soluble antioxidant such as tocopherol.

Examples of a tea polyphenol include water-soluble polyphenols obtained by extracting tea leaves with an aqueous medium such as hot water and alcohol. Tea polyphenols contain catechins as major ingredients. It is known that eight kinds of catechins typically present. Examples of gallate catechin include epigallocatechin gallate, epicatechin gallate, catechin gallate and gallocatechin gallated. Examples of a free catechin include epigallocatechin, epicatechin, catechin and gallocatechin. Tea polyphenol also includes oxidized polyphenols generated by oxidization of tea leaves, other than catechins. In the present invention, use of tea polyphenols containing one or more of such polyphenols and catechins are preferable. More preferably, use of commercially available tea polyphenol composition of which polyphenol content is adjusted to a specific range is preferable. Most preferably, water-soluble composition without formulating with emulsifier is preferable. Preferred tea polyphenol composition include, product name: Sunphenon manufactured by Taiyo Kagaku Co., Ltd. and product name: Sunfood manufactured by Mitsubishi-Kagaku Foods Corporation. A content of tea polyphenol in the tea polyphenol composition is as good as high because it is possible to efficiently disperse into fat at high concentration. It is preferable to contain 50% or more of tea polyphenol in the tea polyphenol composition.

Edible fat of the present invention contains water-soluble antioxidative substance at a content of 150 ppm by weight to 1000 ppm by weight relative to total amount of the, wherein the water-soluble antioxidative substance is a tea polyphenol. 150 ppm by weight to 1000 ppm by weight such as 150 ppm by weight to 600 ppm by weight, most preferably 300 ppm by weight to 1000 ppm by weight such as 300 ppm by weight to 600 ppm by weight of the water-soluble antioxidative substance is contained. When the content of the water-soluble antioxidative substance in the edible fat is less than 5 ppm by weight, sufficient effect of improving oxidation stability cannot be obtained. When the content of the water-soluble antioxidative substance in the edible fat is more than 1000 ppm by weight, homogeneous dispersion cannot be obtained. A content of emulsifier is between twice as much as a content of the water-soluble antioxidative substance and equal to the content of the water-soluble antioxidative substance. When the content of the emulsifier is more than twice as much as the content of the water-soluble antioxidative substance, undesirable taste derived from the emulsifier is felt, the original good taste of food cannot be obtained.

Preferably, an edible fat of the present invention is edible fat, where main raw material of the edible fat is palm oil and a content of water-soluble antioxidative substance in the edible fat is 150 ppm by weight to 1000 ppm by weight.

CDM (Conductmetric Determination Method) stability is a value showing an oxidation stability of fat. As used herein, a value obtained from CDM stability test is an index of evaluation of oxidation stability as "CDM stability time". Longer CDM stability time shows more excellent oxidation stability. As used herein, a method for testing CDM stability is based on the method of the JOCS Standard Methods for the Analysis of Fats and Oils 2.5.1.2-1996. More specifically, fat is put into a reaction vessel and clean air is fed into the vessel while heating at 120°C. Then, volatile decomposition product generated by oxidation is collected in water and conductivity of the water is measured continuously. Time to inflection point in which the value of conductivity changes rapidly shows the "CDM stability time".

Preferably, edible fat of the present invention is edible fat, where main raw material of the edible fat is palm oil and a content of water-soluble antioxidative substance is 150 ppm by weight to 400 ppm by weight such as 150 ppm by weight to 300 ppm by weight, a content of emulsifier is 500 ppm by weight or less, a content of the emulsifier in the fat is 1.5 times or less as much as a content of the water-soluble antioxidative substance and where value of A/N is 1.9 or more. A/N can be obtained as follows:
A: CDM stability time of the edible fat comprising 150 ppm by weight to 400 ppm by weight of water-soluble antioxidative substance.
B: CDM stability time of base fat of A, where the base fat does not contain antioxidative substance.

Preferably, edible fat of the present invention is edible fat, where main raw material of the edible fat is palm oil and a content of water-soluble antioxidative substance is 300 ppm by weight to 1000 ppm by weight such as 300 ppm by weight to 600 ppm by weight, a content of emulsifier in the fat is 1.5 times or less as much as a content of the water-soluble antioxidative substance and where value of A/N is 2.9 or more. A/N can be obtained as follows:
A: CDM stability time of the edible fat comprising 300 ppm by weight to 1000 ppm by weight of water-soluble antioxidative substance.
B: CDM stability time of base fat of A, where the base fat does not contain antioxidative substance.

An emulsifier which is used in the present invention is selected from the group consisting of polyglycerol fatty acid ester, sucrose fatty acid ester and sorbitan fatty acid ester. Preferably, polyglycerol condensed ricinoleic acid ester can be used as the emulsifier. For example, examples of the emulsifier include POEM PR-100 and POEM PR-300 manufactured by RIKEN VITAMIN CO., LTD., SY-Glyster CRS-75 and SY-Glyster CR-ED manufactured by Sakamoto Yakuhin Kogyo Co., Ltd., Sunsoft 818H manufactured by Taiyo Kagaku Co., Ltd. and the like.

A process for obtaining edible fat of the present invention is not particularly limited as long as a water-soluble antioxidative substance can be dispersed into fat. For obtaining edible fat containing tea polyphenol, edible fat containing tea polyphenol and 0.1% by weight or less of water are obtained by preparing aqueous solution dissolving 1% by weight of tea polyphenol composition and adding certain amount of the solution to fat and then subjecting to treatment at 50 to 180ºC under reduced pressure condition at 66.66 to 13332.24 Pa (0.5 to 100 torr) for 15 minutes to 1 hour while stirring to dehydrate sufficiently. A concentration of tea polyphenol dissolved in the solution is preferably 0.1 to 60% by weight, more preferably 1 to 50% by weight. When the concentration is less than 1% by weight, it is not preferable because water content relative to fat increases and thereby long time is required for dehydration. When the concentration is more than 50% by weight, it is not preferable because tea polyphenol in the tea polyphenol composition precipitates and thereby the content of tea polyphenol in fat reduces. The temperature is preferably 50 to 180ºC. The temperature of less than 50ºC is not preferable because long time is required for dehydration. The reduced pressure condition is preferably 66.66 to 13332.24 Pa (0.5 to 100 torr), and pressure as low as possible is preferable.

Edible fat of the present invention can be used in combination with other edible fat. Additive amount of the edible fat of the present invention is preferably 20% by weight or more, more preferably 50% by weight or more. Further preferably, the edible fat of the present invention alone is used from the viewpoint of obtaining excellent oxidation stability.

Edible fat of the present invention can be used for general food containing edible fat. Examples of preferred applications include a food in which fat is exposed on the surface of the food, deep frying, spraying, coating, powdered fat. As functions of edible fat required in such foods, the effect of improving texture, adding taste and improving oxidation stability which affects a shelf life of food are required. In addition, edible fat having good taste and not spoiling original good taste of food is required. Examples of more preferred applications include a fat for heat cooking such as deep flying. It is because edible fat is exposed to oxygen in the air at high temperature that edible fat having excellent oxidation stability is required. Significant effect such as food having excellent oxidation stability and good taste can be obtained by using the edible fat of the present invention in such foods. When used in such applications, using an edible fat containing palm oil as main raw material is preferable from the viewpoint of oxidation stability and taste of fat. Examples of such fats include palm oil which is not subjected to a process such as fractionation, fractionated fat such as palm stearin, palm olein and palm mid fraction, and processed fat thereof such as fractionated fat, hydrogenated fat and interesterified fat, and mixed fat thereof.

In addition, if necessary, additive available for edible fat such as antioxidant, flavor, colorant, silicone can be used in the edible fat of the present invention. Examples

The present invention will be described in more detail below by way of examples of the present invention. In the examples, both of % and part mean a weight basis.

### <Preparation of edible fat>

In the preparation of edible fat containing tea polyphenol, Sunphenon 90S manufactured by Taiyo Kagaku Co., Ltd. is used as tea polyphenol composition. A tea polyphenol content of edible fat is calculated on the assumption that a tea polyphenol content of this tea polyphenol composition is 80% by weight because this tea polyphenol composition contains 80% or more of tea polyphenol.

### <Preparation process of edible fat A>

An aqueous solution dissolving 10% by weight of tea polyphenol was prepared by adding tea polyphenol composition (product name: Sunphenon 90S manufactured by Taiyo Kagaku Co., Ltd.) to water. To 1 kg of low melting point palm oil (palm low melting point fraction, product name: PALM ACE manufactured by Fuji Oil Co., Ltd., iodine value: 67) which was heated to 50ºC, 0.8 g of emulsifier (POEM PR-100 manufactured by RIKEN VITAMIN CO., LTD.) was added and dissolved, then 7.5 g of the aqueous solution dissolving 10% by weight of tea polyphenol was added, and then the mixture was stirred at 10000 rpm for 10 minutes with a Homomixer (TK ROBO MIX manufactured by Tokushu Kika Kogyo Co., Ltd.). Then, the mixture was subjected to dehydration treatment at 50ºC under a reduced pressure of 1333.22 Pa (10 torr) for 30 minutes while stirring to obtain a low melting point palm oil containing 600 ppm by weight of tea polyphenol and 800 ppm by weight of emulsifier (edible fat A).

### <Preparation process of edible fat B>

An aqueous solution dissolving 1% by weight of tea polyphenol was prepared by adding tea polyphenol composition (product name: Sunphenon 90S manufactured by Taiyo Kagaku Co., Ltd.) to water. To 1 kg of low melting point palm oil (palm low melting point fraction, product name: PALM ACE manufactured by Fuji Oil Co., Ltd., iodine value: 67) which was heated to 50ºC, 3.75 g of the aqueous solution dissolving 1% by weight of tea polyphenol was added, and then the mixture was stirred at 10000 rpm for 10 minutes with a Homomixer (TK ROBO MIX manufactured by Tokushu Kika Kogyo Co., Ltd.). Then, the mixture was subjected to dehydration treatment at 50ºC under a reduced pressure of 1333.22 Pa (10 torr) for 30 minutes while stirring to obtain a low melting point palm oil containing 30 ppm by weight of tea polyphenol (edible fat B).

### <Preparation process of edible fat C>

An aqueous solution dissolving 1% by weight of tea polyphenol was prepared by adding a tea polyphenol composition (product name: Sunphenon 90S manufactured by Taiyo Kagaku Co., Ltd.) to water. To 1 kg of low melting point palm oil (Palm low melting point fraction, product name: PALM ACE manufactured by Fuji Oil Co., Ltd., iodine value: 67) which was heated to 50ºC, 1.9 g of the aqueous solution dissolving 1% by weight of tea polyphenol was added, and then the mixture was stirred at 10000 rpm for 10 minutes with a Homomixer (TK ROBO MIX manufactured by Tokushu Kika Kogyo Co., Ltd.). Then, the mixture was subjected to dehydration treatment at 50ºC under a reduced pressure of 1333.22 Pa (10 torr) for 30 minutes while stirring to obtain a low melting point palm oil containing 15 ppm by weight of tea polyphenol (edible fat C).

### <Evaluation method>

### (1) Evaluation method of taste of edible fat

Taste evaluation of edible fat was carried out after adjusting the temperature of the edible fat to 20ºC. The taste was evaluated by a smelling sense and taste sense of 10 panelists into ranks "5", "4", "3", "2", and "1" in order of excellent to poor taste, and the average evaluation point was assumed to be an evaluation result. Four point or more was judged as acceptable.

### (2) Evaluation method of taste of corn puffs

Taste evaluation of corn puffs was carried out after spraying each 50 parts by weight of edible fat to 100 parts by weight of corn puff balls of 10 mm in diameter (manufactured by Kinoshita Co., Ltd.). The taste was evaluated by a smelling sense and taste sense of 10 panelists into ranks "5", "4", "3", "2", and "1" in order of excellent to poor taste, and the average evaluation point was assumed to be an evaluation result. Four point or more was judged as acceptable.

### (3) CDM stability time

An oxidation stability of edible fat was evaluated by using CDM testing machine, Rancimat, manufactured by Metrohm AG. Determination of oxidation stability of each edible fat was carried out by comparing time difference caused by extension of CDM time stability in correlation with increase in oxidation stability of edible fat. Measurement conditions: measurement temperature: 120°C, air throughput: 20 L/h, 3 g of fat sample was amounted.

### [Example 1]

The edible fat A was used as edible fat as is. This edible fat was evaluated according to the above-described method. Results were summarized in table 1.

### [Example 2]

To 50 parts by weight of the edible fat A, 50 parts by weight of low melting point palm oil (palm low melting point fraction, product name: PALM ACE manufactured by Fuji Oil Co., Ltd., iodine value: 67) was added to obtain edible fat containing 300 ppm by weight of tea polyphenol and 400 ppm by weight of emulsifier. This edible fat was evaluated according to the above-described method. Results were summarized in table 1.

### [Example 3]

To 25 parts by weight of the edible fat A, 75 parts by weight of low melting point palm oil (palm low melting point fraction, product name: PALM ACE manufactured by Fuji Oil Co., Ltd., iodine value: 67) was added to obtain edible fat containing 150 ppm by weight of tea polyphenol and 200 ppm by weight of emulsifier. This edible fat was evaluated according to the above-described method. Results were summarized in table 1.

### [Comparative example 4]

The edible fat B was used as edible fat as is. This edible fat was evaluated according to the above-described method. Results were summarized in table 1.

### [Comparative example 5]

The edible fat C was used as edible fat as is. This edible fat was evaluated according to the above-described method. Results were summarized in table 1.

### [Comparative Example 1]

To low melting point palm oil (palm low melting point fraction, product name: PALM ACE manufactured by Fuji Oil Co., Ltd., iodine value: 67), 1500 ppm by weight of oil-soluble tea polyphenol composition, product name: Sunkatol M97 manufactured by Taiyo Kagaku Co.,Ltd., containing 10% of tea polyphenol, 9% of mix tocopherol, 64% of glycerol fatty acid ester and 17% of food material was added to obtain edible fat. This edible fat was evaluated according to the above-described method. Results were summarized in table 1. Emulsifier content was calculated based on 64% of glycerol fatty acid ester contained in the tea polyphenol composition and described in table 1.

### [Comparative Example 2]

To low melting point palm oil (palm low melting point fraction, product name: PALM ACE manufactured by Fuji Oil Co., Ltd., iodine value: 67), 135 ppm by weight of mix tocopherol was added to obtain edible fat. This edible fat was evaluated according to the above-described method. Results were summarized in table 1.

### [Comparative Example 3]

Low melting point palm oil (palm low melting point fraction, product name: PALM ACE manufactured by Fuji Oil Co., Ltd., iodine value: 67) was used as edible fat as is. This edible fat was evaluated according to the above-described method. Results were summarized in table 1.

**[Table 1]**

| | Example 1 | Example 2 | Example 3 | Example 4 | Example 5 | Comparative Example 1 | Comparative Example 2 | Comparative Example 3 |
|---|---|---|---|---|---|---|---|---|
| Tea polyphenol (ppm by weight) = C | 600 | 300 | 150 | 30 | 15 | 150 | 0 | 0 |
| Mix tocopherol (ppm by weight) | 0 | 0 | 0 | 0 | 0 | 135 | 135 | 0 |
| Emulsifier (ppm by weight) = E | 800 | 400 | 200 | 0 | 0 | 960 | 0 | 0 |
| E/C | 1.3 | 1.3 | 1.3 | - | - | 6.4 | - | - |
| (1) Taste evaluation result of edible fat | 4.6 | 4.8 | 4.9 | 4.9 | 4.9 | 2.2 | 4.9 | 4.9 |
| (2) Taste evaluation result of corn puff | 4.5 | 4.8 | 4.9 | 4.9 | 5.0 | 1.8 | 4.8 | 5.0 |
| (3) CDM stability time | 32.3 | 26.8 | 18.1 | 15.2 | 12.4 | 18.0 | 10.8 | 9.3 |

### (Discussion of table 1)

As shown in table 1, good results were obtained in both taste evaluation, (1) edible fat and (2) corn puff, in the taste evaluation of Examples 1 to 3 and Comparative Examples 4 and 5. In Comparative Example 1, both (1) edible fat and (2) corn puff has strong peculiar taste and taste of corn puff was significantly deteriorated.

As shown in table 1, results showing that (3) CDM stability time in Example 5 was significantly extended compared with those in Comparative Examples 2 and 3 were obtained. (3) CDM stability time was further extended with increase in the tea polyphenol content in Examples 1 to 4.

As is clear from the above results, good results of all (1) taste evaluation result of edible fat, (2) taste evaluation result of corn puff and (3) CDM stability time were obtained in Examples 1 to 3 obtained in accordance with the present invention.

### (Evaluation of oxidation stability)

Oxidation stability was compared and evaluated by calculating A/N value by the following method with using CDM stability time as an index. The evaluation results are shown in table 2.
A: CDM stability time obtained in Examples 1 to 5
N: CDM stability time of base fat of A, edible fat in Comparative Example 3.

**[Table 2]**

| | Example 1 | Example 2 | Example 3 | Example 4 | Example 5 | Comparative Example 3 |
|---|---|---|---|---|---|---|
| Tea polyphenol (ppm by weight) | 600 | 300 | 150 | 30 | 15 | 0 |
| CDM stability time | 32.3 | 26.8 | 18.1 | 15.2 | 12.4 | 9.3 |
| A/N | 3.5 | 2.9 | 1.9 | 1.6 | 1.3 | (1.0) |

Examples 4 and 5 correspond to Comparative Examples 4 and 5.

### Industrial Applicability

The present invention enables to provide edible fat for food containing fat having desired improved oxidation stability and a food containing the edible fat as well as a production process thereof.

## Claims

1. Edible fat comprising a tea polyphenol at a content of 150 ppm by weight to 1000 ppm by weight relative to total amount of the edible fat and an emulsifier, wherein a content of the emulsifier in the edible fat is between twice as much as a content of the tea polyphenol and equal to the content of the tea polyphenol, wherein the emulsifier is selected from the group consisting of polyglycerol fatty acid ester, sucrose fatty acid ester and sorbitan fatty acid ester.

2. The edible fat according to claim 1, wherein a main raw material of the edible fat is palm oil.

3. The edible fat according to claim 1 or 2, wherein a main raw material of the edible fat is palm oil, a content of the tea polyphenol in the edible fat is 150 ppm by weight to 400 ppm by weight, a content of the emulsifier in the edible fat is 500 ppm by weight or less, a content of the emulsifier in the fat is 1.5 times or less as much as a content of the tea polyphenol, and wherein value of A/N is 1.9 or more, wherein
A represents CDM stability time of the edible fat comprising 150 ppm by weight to 400 ppm by weight of tea polyphenol, and
N represents CDM stability time of base fat of A, wherein the base fat does not comprise tea polyphenol.

4. A process for improving an oxidation stability of a food, comprising using the edible fat recited in any one of claims 1 to 4.

5. A process for producing the edible fat recited in any one of claims 1 to 3, comprising adding tea polyphenol, and an emulsifier selected from the group consisting of polyglycerol fatty acid ester, sucrose fatty acid ester and sorbitan fatty acid ester, to aqueous medium to form solution dissolving 1 to 50% by weight of tea polyphenol, and adding the solution to fat, and then removing water at 50 to 180°C under reducing pressure at 66.66 to 13332.24 Pa (0.5 to 100 torr) for 15 minutes to 1 hour while stirring, wherein the edible fat contains 0.1% by weight or less of water.

## Patentansprüche

1. Speisefett, das ein Teepolyphenol in einem Anteil von 150 Gew.-ppm bis 1000 Gew.-ppm, bezogen auf die Menge des Speisefetts, und einen Emulgator umfasst, wobei der Gehalt des Emulgators in dem Speisefett zwischen dem Doppelten des Gehalts des Teepolyphenols und dem einfachen Gehalt des Teepolyphenols liegt, wobei der Emulgator aus der Gruppe ausgewählt ist, die aus Polyglycerinfettsäureester, Saccharinfettsäureester und Sorbitfettsäureester besteht.

2. Speisefett gemäß Anspruch 1, wobei der Hauptrohstoff des Speisefetts Palmöl ist.

3. Speisefett gemäß Anspruch 1 oder 2, wobei der Hauptrohstoff des Speisefetts Palmöl ist, der Gehalt des Teepolyphenols in dem Speisefett 150 Gew.-ppm bis 400 Gew.-ppm beträgt, der Gehalt des Emulgators in dem Speisefett 500 Gew.-ppm oder weniger beträgt, der Gehalt des Emulgators in dem Fett das 1,5-fache des Gehalts des Teepolyphenols oder weniger beträgt und wobei der Wert A/N 1,9 oder mehr beträgt, wobei
A für die CDM-Stabilitätszeit (gemäß konduktometrischem Bestimmungsverfahren) des Speisefetts, das 150 Gew.-ppm bis 400 Gew.-ppm Teepolyphenol umfasst, steht und
N für die CDM-Stabilitätszeit des Grundfetts von A steht, wobei das Grundfett kein Teepolyphenol umfasst.

4. Verfahren zur Verbesserung der Oxidationsstabilität eines Lebensmittels, umfassend das Verwenden des Speisefetts gemäß einem der Ansprüche 1 bis 4.

5. Verfahren zur Herstellung des Speisefetts gemäß einem der Ansprüche 1 bis 3,
umfassend das Hinzufügen von Teepolyphenol und eines Emulgators, der aus der Gruppe ausgewählt ist, die aus Polyglycerinfettsäureester, Saccharinfettsäureester und Sorbitfettsäureester besteht, zu einem wässrigen Medium unter Bildung einer Lösung, in der 1 bis 50 Gew.-% Teepolyphenol gelöst sind, und Hinzufügen der Lösung zu Fett und dann Entfernen von Wasser bei 50 bis 180 °C unter reduziertem Druck bei 66,66 bis 13332,24 Pa (0,5 bis 100 Torr) während 15 Minuten bis 1 Stunde unter Rühren, wobei das Speisefett 0,1 Gew.-% oder weniger Wasser enthält.

## Revendications

1. Graisse comestible comprenant un polyphénol de thé à une teneur de 150 ppm en masse à 1 000 ppm en masse par rapport à la quantité totale de la graisse comestible et un émulsionnant, dans laquelle une teneur de l'émulsionnant dans la graisse comestible est entre deux fois la teneur du polyphénol de thé et la teneur du polyphénol de thé, dans laquelle l'émulsionnant est choisi dans le groupe consistant en ester d'acide gras de polyglycérol, ester d'acide gras de saccharose et ester d'acide gras de sorbitane.

2. Graisse comestible selon la revendication 1, dans laquelle une matière première principale de la graisse comestible est l'huile de palme.

3. Graisse comestible selon la revendication 1 ou 2, dans laquelle une matière première principale de la graisse comestible est l'huile de palme, une teneur du polyphénol de thé dans la graisse comestible est de 150 ppm en masse à 400 ppm en masse, une teneur de l'émulsionnant dans la graisse comestible est de 500 ppm en masse ou inférieure, une teneur de l'émulsionnant dans la graisse est de 1,5 fois ou moins celle d'une teneur du polyphénol de thé, et dans laquelle une valeur A/N est de 1,9 ou supérieure, dans laquelle
A représente la durée de stabilité CDM de la graisse comestible comprenant 150 ppm en masse à 400 ppm en masse de polyphénol de thé, et
N représente la durée de stabilité CDM d'une graisse de base de A, dans laquelle la graisse de base ne comprend pas de polyphénol de thé.

4. Procédé d'amélioration d'une stabilité à l'oxydation d'un aliment, comprenant l'utilisation de la graisse comestible selon l'une quelconque des revendications 1 à 4.

5. Procédé de production de la graisse comestible selon l'une quelconque des revendications 1 à 3, comprenant l'addition de polyphénol de thé, et d'un émulsionnant choisi dans le groupe consistant en ester d'acide gras de polyglycérol, ester d'acide gras de saccharose et ester d'acide gras de sorbitane, à un milieu aqueux pour former une solution dissolvant de 1 à 50 % en masse de polyphénol de thé, et l'addition de la solution à la graisse, et ensuite l'élimination d'eau à de 50 à 180°C sous pression réduite à de 66,66 à 13 332,24 Pa (0,5 à 100 torr) pendant de 15 minutes à 1 heure tout en agitant, dans lequel la graisse comestible contient 0,1 % en masse ou moins d'eau.
